# EUROPEAN PATENT SPECIFICATION

(11) **EP 3 393 616 B1**
(45) Date of publication and mention of the grant of the patent: **09.10.2019**
(21) Application number: 16825447.2
(22) Date of filing: 20.12.2016
(51) Int. Cl.: B01D 33/056, B01D 33/80

(54) **METHOD AND ARRANGEMENT FOR MONITORING THE CONDITION OF A SEALING ARRANGEMENT OF A VACUUM BELT FILTER DEVICE AND A WEAR STRIP**
VERFAHREN UND ANORDNUNG ZUR ÜBERWACHUNG DES ZUSTANDES EINER DICHTUNGSANORDNUNG EINER VAKUUMBANDFILTERVORRICHTUNG UND VERSCHLEISSLEISTE
PROCÉDÉ ET DISPOSITIF POUR LA SURVEILLANCE DE L'ÉTAT D'UN DISPOSITIF D'ÉTANCHÉITÉ D'UN DISPOSITIF DE FILTRE À BANDE SOUS VIDE ET D'UNE BANDE D'USURE

(30) Priority: 21.12.2015 FI 20155985
(43) Date of publication of application: 31.10.2018
(73) Proprietor: Outotec (Finland) Oy, 02230 Espoo (FI)
(72) Inventor: TALKA, Marja, 53900 Lappeenranta (FI); VESALA, Antti, 02780 Espoo (FI); SUIHKONEN, Pekka, 53100 Lappeenranta (FI); MIKKOLA, Harri, 53850 Lappeenranta (FI); LUOMA, Matti, 53100 Lappeenranta (FI)
(74) Representative: Boco IP Oy Ab
(86) International application number: PCT/FI2016/050900
(87) International publication number: WO 2017/109280

(56) References cited:
- WO-A1-2013/024057
- GB-A- 2 064 974
- US-A1- 2009 266 684

## Description

### Field of the invention

The invention relates to a method for monitoring the condition of a sealing arrangement between an endless moving filter belt of a vacuum belt filter device and a vacuum arrangement of the vacuum belt filter device, wherein the sealing arrangement comprises an endless seal belt running in contact with a low pressure side of the endless moving filter belt in a first groove of the vacuum arrangement, as defined in the preamble of independent claim 1.

The invention also relates to an arrangement for monitoring the condition of a sealing arrangement between an endless moving filter belt of a vacuum belt filter device and a vacuum arrangement of the vacuum belt filter device, wherein the sealing arrangement comprises an endless seal belt running in contact with a low pressure side of the endless moving filter belt in a first groove of the vacuum arrangement, as defined in the preamble of independent claim 14.

The invention relates also to a wear strip for use in the method and in the arrangement as defined in claim 27. The vacuum belt filter device can be configured to extract solids from a suspension containing solids.

Publication GB 2 064 974 presents a moving belt filter.

### Objective of the invention

The object of the invention is to provide a method and an arrangement for monitoring the condition of a sealing arrangement between an endless moving filter belt of a vacuum belt filter device and a vacuum arrangement of the vacuum belt filter device so that easy monitoring of the condition of the sealing arrangement is provided for and so that easy maintenance of the condition of the sealing arrangement is provided for and additionally to provide a wear strip for use in the method and in the arrangement.

### Short description of the invention

The method is characterized by the definitions of independent claim 1.

Preferred embodiments of the method are defined in dependent claims 2 to 6.

The vacuum belt filter device is correspondingly characterized by the definitions of independent claim 7.

Preferred embodiments of the vacuum belt filter device are defined in the dependent claims 8 to 12.

The invention relates also to a wear strip for use in the method and in the vacuum belt filter device as defined in claim 13.

Preferred embodiments of the wear strip are defined in the dependent claims 14 to 15.

The invention is based on providing a detachable wear strip, comprising perforations for allowing lubricating fluid to pass through the detachable wear strip, on arranging the detachable wear strip between the vacuum arrangement of the vacuum belt filter device and the endless seal belt of the sealing arrangement of the vacuum belt filter device, on providing an intelligent identifier, on arranging the intelligent identifier between the vacuum arrangement of the vacuum belt filter device and the endless seal belt of the sealing arrangement of the vacuum belt filter device into an identifying position, on providing a interrogator, and on receiving a signal with said interrogator indicative of the condition of the detachable wear strip.

In an embodiment, the intelligent identifier is provided at least partly in the detachable wear strip and the intelligent identifier is arranged between the vacuum arrangement and the endless seal belt by arranging the detachable wear strip between the vacuum arrangement and the endless seal belt.

In an embodiment, the intelligent identifier is arranged between the vacuum arrangement and the detachable wear strip.

In an embodiment a signal is received with said interrogator from said intelligent identifier indicative of the condition of the detachable wear strip after the thickness of the detachable wear strip has worn to a threshold thickness so that when the detachable wear strip has worn to the threshold thickness, the intelligent identifier becomes un-embedded of material forming the wear strip to such extent so that the intelligent identifier is capable of producing signal to be detected the interrogator. The thickness of the detachable wear strip is reduced due to the movement of the endless seal belt i.e. the endless seal belt has a wearing effect or an eroding effect on the detachable wear strip.

In an embodiment a signal is received with said interrogator from said intelligent identifier indicative of the condition of the detachable wear strip until the thickness of the detachable wear strip has worn to a threshold thickness so that when the detachable wear strip has worn to the threshold thickness, the intelligent identifier is configured to be damaged at least in part with the result that the intelligent identifier does not longer produce a signal to be detected by the interrogator which can mean that the detachable wear strip must be replaced in order to achieve a desired sealing effect in the sealing arrangement. The thickness of the detachable wear strip is reduced due to the movement of the endless seal belt i.e. the endless seal belt has a wearing effect or an eroding effect on the detachable wear strip.

In an embodiment a signal is received with said interrogator from said intelligent identifier indicative of the condition of the detachable wear strip until the thickness of the detachable wear strip has worn to a threshold thickness so that when the detachable wear strip has worn to the threshold thickness, the intelligent identifier is configured to be short-circuited with the result that the intelligent identifier does not longer produce a signal to be detected by the interrogator which can mean that the detachable wear strip must be replaced in order to achieve a desired sealing effect in the sealing arrangement. The thickness of the detachable wear strip is reduced due to the movement of the endless seal belt i.e. the endless seal belt has a wearing effect or an eroding effect on the detachable wear strip.

In an embodiment a signal is received with said interrogator from said intelligent identifier indicative of the condition of the detachable wear strip until the thickness of the detachable wear strip has worn to a threshold thickness so that when the detachable wear strip has worn to the threshold thickness, the intelligent identifier is configured to detach from the wear strip with the result that the intelligent identifier does not longer produce a signal to be detected by the interrogator with the result that the intelligent identifier does not longer produce a signal to be detected by the interrogator which can mean that the detachable wear strip must be replaced in order to achieve a desired sealing effect in the sealing arrangement. The thickness of the detachable wear strip is reduced due to the movement of the endless seal belt i.e. the endless seal belt has a wearing effect or an eroding effect on the detachable wear strip.

In an embodiment a signal with said interrogator from said intelligent identifier indicative of the condition of the detachable wear strip as long as said intelligent identifier is in said identifying position. If the signal is lost, this can mean that the detachable wear strip has shifted into an incorrect position.

### List of figures

In the following the invention will described in more detail by referring to the figures, of which
Figure 1 shows the working principle of a vacuum belt filter device,

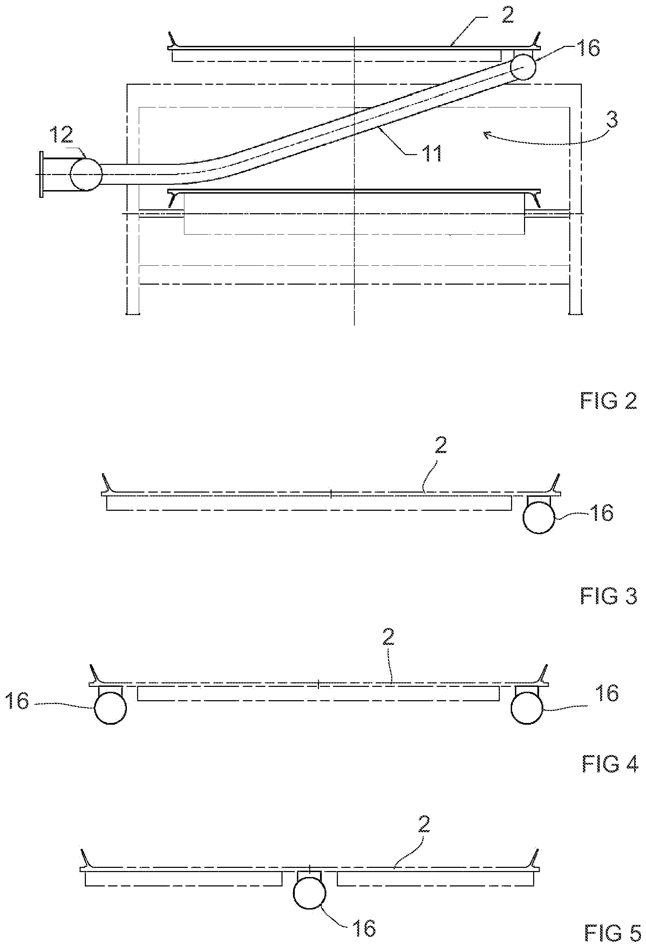

Figure 2 shows in cut view an arrangement for monitoring the condition of a sealing arrangement of a vacuum belt filter device,
Figure 3 shows a detail of the arrangement shown in figure 2,
Figure 4 shows an alternative configuration of the detail shown in figure 3,
Figure 5 shows an alternative configuration of the detail shown in figure 3,

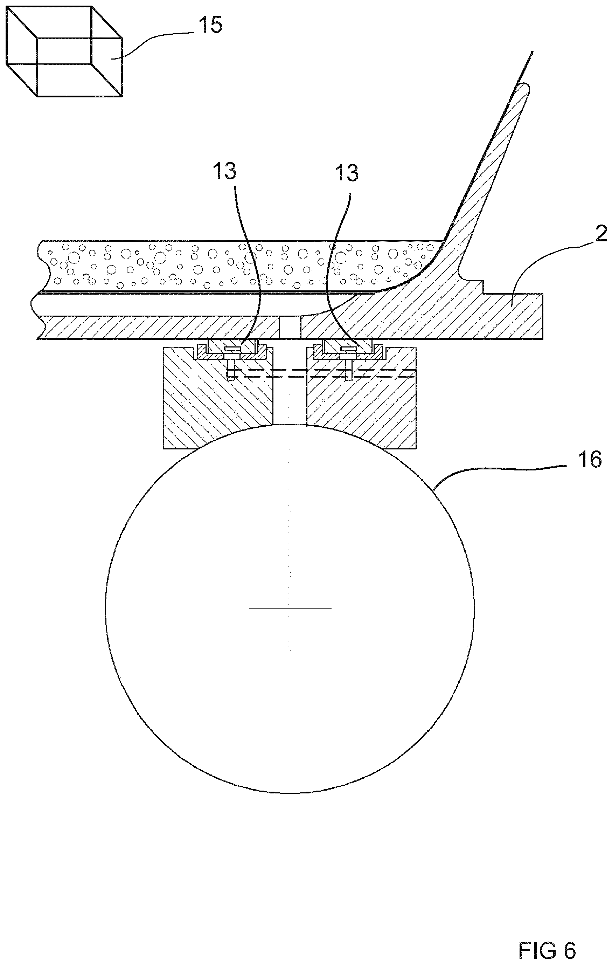

Figure 6 show in cut view a detail of the arrangement shown in figure 2,

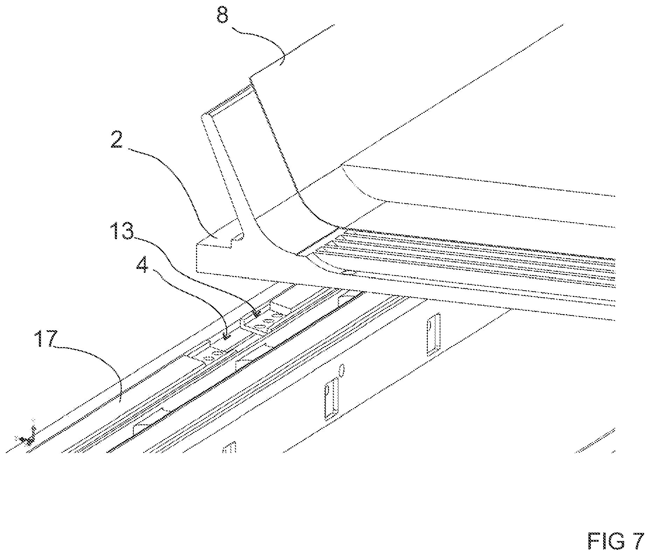

Figure 7 shows in partly cut view a detail of an arrangement for monitoring the condition of a sealing arrangement of a vacuum belt filter device,
Figure 8 shows a wear strip according to a first embodiment,
Figure 9 shows a wear strip according to a second embodiment,

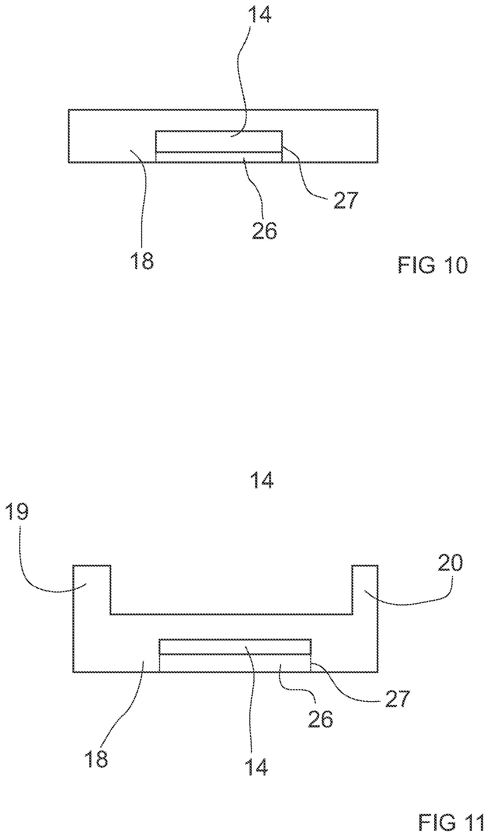

Figure 10 shows in cut view a wear strip according to a third embodiment,
Figure 11 shows in cut view a wear strip according to a fourth embodiment,

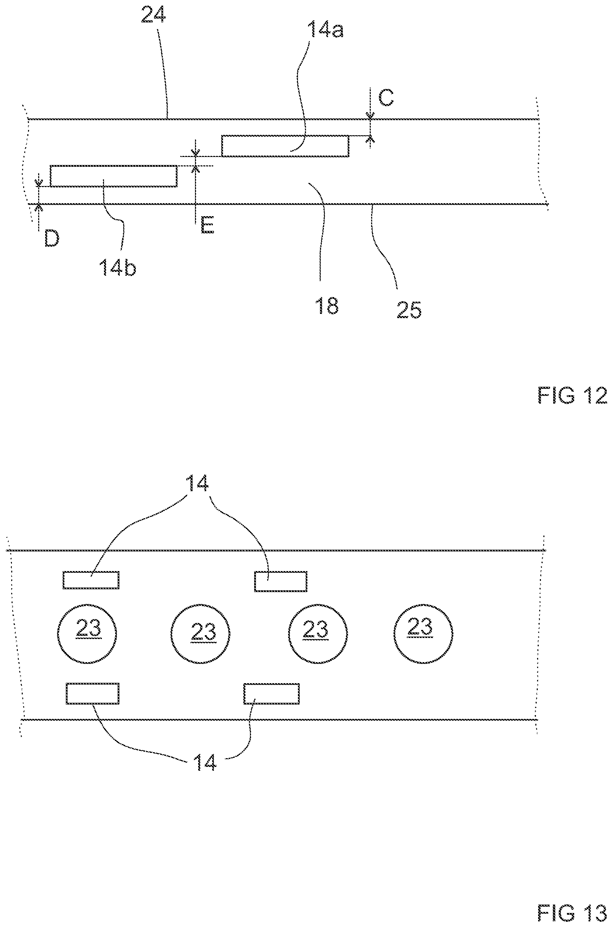

Figure 12 shows in cut view a wear strip according to a fifth embodiment, and
Figure 13 shows in cut view a wear strip according to a sixth embodiment.

### Detailed description of the invention

First the method for monitoring the condition of a sealing arrangement 1 between an endless moving filter belt 2 of a vacuum belt filter device and a vacuum arrangement 3 of the vacuum belt filter device and some embodiments and variants of the method will be described in greater detail.

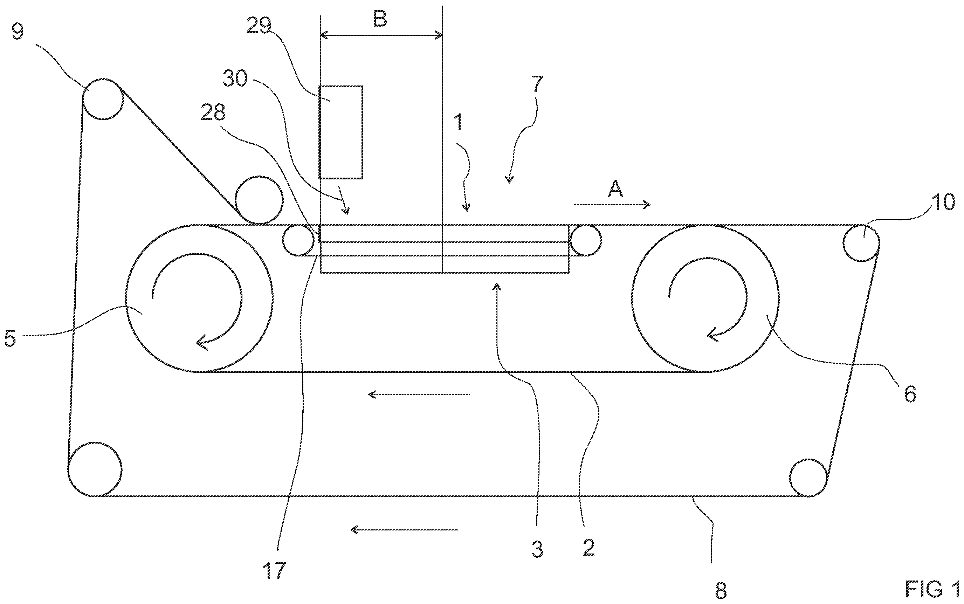

The sealing arrangement 1 comprises an endless seal belt 17 running in contact with a low pressure side (not marked with a reference numeral) of the endless moving filter belt 2 in a first groove 4 of the vacuum arrangement 3. The endless moving filter belt 2 may revolve around at least a first roller 5 and a second roller 6, as shown in figure 1. The vacuum arrangement 3 is configured to produce a suction at the low pressure side of the endless moving filter belt 2 at a working zone 7 of the vacuum belt filter device. The vacuum belt filter device may comprise an endless moving filter cloth 8 that revolves around at least a third roller 9 and a fourth roller 10, and arranging the endless moving filter cloth 8 on a high pressure side (not marked with a reference numeral) of the endless moving filter belt 2 and in contact with the endless moving filter belt 2 at the working zone 7 of the vacuum belt filter device. The vacuum arrangement 3 may comprise vacuum tubing 11 and a manifold arrangement 12.

The method comprises a first providing step for providing the sealing arrangement 1 with a detachable wear strip 13.

The method comprises a first arranging step for arranging the detachable wear strip 13 between the vacuum arrangement 3 and the endless seal belt 17 of the sealing arrangement 1.

The method comprises a second providing step for providing an intelligent identifier 14.

The method comprises a second arranging step for arranging the intelligent identifier 14 between the vacuum arrangement 3 and the endless seal belt 17 of the sealing arrangement 1 into an identifying position.

The method comprises a third providing step for providing a interrogator 15.The method comprises receiving a signal with said interrogator 15 from said intelligent identifier 14 indicative of the condition of the detachable wear strip 13.

The method may comprise providing the intelligent identifier 14 in the second providing step at least partly in the detachable wear strip 13 that is provided in the first providing step, and arranging the intelligent identifier 14 in the second arranging step between the vacuum arrangement 3 and the endless seal belt 17 by arranging the detachable wear strip 13 between the vacuum arrangement 3 and the endless seal belt 17 in the first arranging step.

The method may comprise arranging the intelligent identifier 14 in the second arranging step between the vacuum arrangement 3 and the detachable wear strip 13. The detachable wear strip 13 can for example be at least partly attached to the vacuum arrangement 3 by means of the intelligent identifier 14.

In an embodiment of the method, a signal is received with said interrogator 15 from said intelligent identifier 14 indicative of the condition of the detachable wear strip 13 after the thickness of the detachable wear strip 13 has worn to a threshold thickness.

In an embodiment of the method, a signal is received with said interrogator 15 from said intelligent identifier 14 indicative of the condition of the detachable wear strip 13 until the thickness of the detachable wear strip 13 has worn to a threshold thickness.

In an embodiment of the method, a signal is received with said interrogator 15 from said intelligent identifier 14 indicative of the condition of the detachable wear strip 13 as long as said intelligent identifier 14 is in said identifying position.

The material forming the detachable wear strip 13 comprises preferably, but not necessarily, at least one of the following: polymer, metal, and ceramic.

The method may comprise providing in the second providing step an intelligent identifier 14 in the form of an active RFID device. An active RFID device normally includes a power source (not shown in the drawings) such as a battery and a RFID communications unit (not shown in the drawings) that includes a transmitter (not shown in the drawings) and/or a receiver (not shown in the drawings) and other components (not shown in the drawings) of the active RFID device.

The method may comprise providing in the second providing step an intelligent identifier 14 in the form of a passive RFID device. A passive RFID device does not include a power source, and turns on when a RF signal is received by the passive RFID device. A passive RFID device normally includes an antenna (not shown in the drawings) and base (not shown in the drawings) in communication with the antenna. When the antenna absorbs a radio frequency signal having a key frequency from an interrogator, the antenna collects the RF energy and transmits the energy to the base. In response to receiving the energy, the base sends a signal back to the interrogator.

The method may comprise providing in the second providing step an intelligent identifier14 in the form of a semi-passive RFID device. A semi-passive RFID device is similar to a passive RFID device with the exception that the base is powered by a power source (not shown in the drawings).

The method may comprise arranging the detachable wear strip 13 in the first arranging step so that the detachable wear strip 13 comprising a RFID device 14 is arranged at least partly in the first groove 4 of the vacuum arrangement 3. A width of the detachable wear strip 13 comprising a RFID device 14 corresponds preferably, but not necessarily, to the width of the first groove 4 of the vacuum arrangement 3.

The method may comprise arranging the detachable wear strip 13 in the first arranging step so that the detachable wear strip 13 covers a bottom of the first groove 4 of the vacuum arrangement 3 essentially completely.

The method may comprise arranging the detachable wear strip 13 in the first arranging step so that the detachable wear strip 13 fills the first groove 4 of the vacuum arrangement 3 essentially completely.

The detachable wear strip 1 that is provided in the first providing step may comprise a second groove 22, and the detachable wear strip 13 may be arranged in the first arranging step so that endless seal belt 17 runs at least partly in the second groove 22.

The detachable wear strip 13 that is provided in the first providing step comprises perforations 23 for allowing lubricating fluid such as water to pass through the detachable wear strip 13.

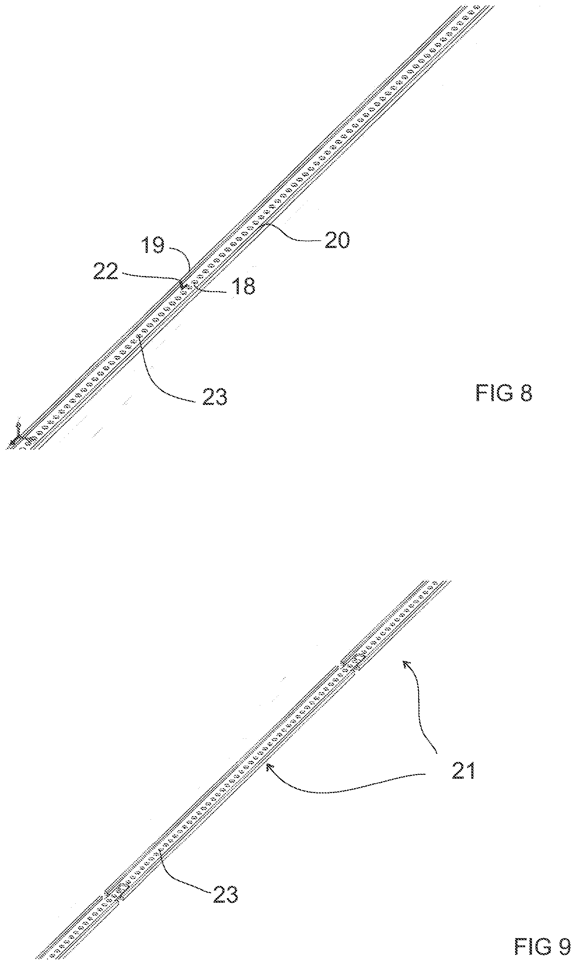

The detachable wear strip 13 that is provided in the first providing step may comprise several fixedly or releasable connected wear strip sections 21, as shown in figure 9, or be in one-piece form, as shown in figure 8.

The method comprises preferably, but not necessarily, arranging the intelligent identifier 14 in the second arranging step within 10 meters, preferably within 4 meters, more preferably within 2 meters, from an upstream end 28 of the vacuum arrangement 1 of the vacuum belt filter device i.e. within a distance B from an upstream end of the vacuum arrangement 1 of the vacuum belt filter device, which distance B is less than 10 meters, preferably less than 4 meters, more preferably less than 2 meters. Material 30 to be filtered is at the upstream end 28 of the vacuum arrangement 1 of the vacuum belt filter device fed onto the endless moving filter belt 2 and the sealing arrangement is therefore more subjected to wear at the upstream end 28 of the vacuum arrangement 1 of the vacuum belt filter device.

Next a vacuum belt filter device comprising an arrangement for monitoring the condition of a sealing arrangement 1 between an endless moving filter belt 2 of a vacuum belt filter device and a vacuum arrangement 3 of the vacuum belt filter device and some embodiments and variants of the arrangement will be described in greater detail.

The sealing arrangement 1 comprises an endless seal belt 17 running in contact with a low pressure side of the endless moving filter belt 2 in a first groove 4 of the vacuum arrangement 3.

The endless moving filter belt 2 may revolve around at least a first roller 5 and a second roller 6, as shown in figure 1. The vacuum arrangement 3 is configured to produce a suction at a low pressure side (not marked with a reference numeral) of the endless moving filter belt 2 at a working zone 7 of the vacuum belt filter device. The vacuum belt filter device may comprise an endless moving filter cloth 8 that revolves around at least a third roller 9 and a fourth roller 10, and arranging the endless moving filter cloth 8 on a high pressure side (not marked with a reference numeral) of the endless moving filter belt 2 and in contact with the endless moving filter belt 2 at the working zone 7 of the vacuum belt filter device. The vacuum arrangement 3 may comprise vacuum tubing 10, a manifold arrangement 11, and a vacuum box 16.

The sealing arrangement 1 comprises a detachable wear strip 13 between the vacuum arrangement 3 and the endless seal belt 17.

The arrangement comprises an intelligent identifier 14 arranged between the vacuum arrangement 3 and the endless seal belt 17 in an identifying position.

The arrangement comprises an interrogator 15. The interrogator 15 is configured to receive a signal from the intelligent identifier 14 indicative of the condition of the detachable wear strip 13.

The intelligent identifier 14 can be at least partly arranged in the detachable wear strip 13 that is arranged between the vacuum arrangement 3 and the endless seal belt 17.

The intelligent identifier 14 can be arranged between the vacuum arrangement 3 and the detachable wear strip 13. The detachable wear strip 13 can for example be at least partly attached to the vacuum arrangement 3 by means of the intelligent identifier 14.

The interrogator 15 can be configured to receive a signal from said intelligent identifier 14 indicative of the condition of the detachable wear strip 13 after the thickness of the detachable wear strip 13 has worn to a threshold thickness.

The interrogator 15 can be configured to receive a signal from said intelligent identifier 14 indicative of the condition of the detachable wear strip 13 until the thickness of the detachable wear strip 13 has worn to a threshold thickness.

The interrogator 15 can be configured to receive a signal from said intelligent identifier 14 indicative of the condition of the detachable wear strip 13 as long as said intelligent identifier 14 is in said identifying position.

The intelligent identifier 14 can be an active RFID device. An active RFID device normally includes a power source (not shown in the drawings) such as a battery and a RFID communications unit (not shown in the drawings) that includes a transmitter (not shown in the drawings) and/or a receiver (not shown in the drawings) and other components (not shown in the drawings) of the active RFID device.

The intelligent identifier 14 can be a passive RFID device. A passive RFID device does not include a power source, and turns on when a RF signal is received by the passive RFID device. A passive RFID device normally includes an antenna (not shown in the drawings) and base (not shown in the drawings) in communication with the antenna. When the antenna absorbs a radio frequency signal having a key frequency from an interrogator, the antenna collects the RF energy and transmits the energy to the base. In response to receiving the energy, the base sends a signal back to the interrogator.

The intelligent identifier 14 can be a semi-passive RFID device. A semi-passive RFID device is similar to a passive RFID device with the exception that the base is powered by a power source (not shown in the drawings).

The detachable wear strip 13 may be arranged so that the detachable wear strip 13 is arranged at least partly in the first groove 4 of the vacuum arrangement 3. A width of the detachable wear strip 13 corresponds preferably, but not necessarily, to the width of the first groove 4 of the vacuum arrangement 3.

The detachable wear strip 13 may be arranged so that the detachable wear strip 13 covers a bottom of the first groove 4 of the vacuum arrangement 3 essentially completely.

The detachable wear strip 13 may be arranged so that the detachable wear strip 13 comprising fills the first groove 4 of the vacuum arrangement 3 essentially completely.

The detachable wear strip 13 can comprise a second groove 22, and the detachable wear strip 13 may being arranged so that endless seal belt 17 is configured to run at least partly in the second groove 22.

The detachable wear strip 13 comprises perforations 23 for allowing lubricating fluid such as water to pass through the detachable wear strip 13.

The detachable wear strip 13 may comprise several fixedly or releasable connected wear strip sections 21, as shown in figure 9, or be in one-piece form, as shown in figure 8. The intelligent identifier 14 is preferably, but not necessarily, arranged within 10 meters, preferably within 4 meters, more preferably within 2 meters, from an upstream end of the vacuum arrangement 1 of the vacuum belt filter device, i.e. within a distance B from an upstream end of the vacuum arrangement 1 of the vacuum belt filter device, which distance B is less than 10 meters, preferably less than 4 meters, more preferably less than 2 meters. Material 30 to be filtered is at the upstream end 28 of the vacuum arrangement 1 of the vacuum belt filter device fed onto the endless moving filter belt 2 and the sealing arrangement is therefore more subjected to wear at the upstream end 28 of the vacuum arrangement 1 of the vacuum belt filter device.

Next the detachable wear strip 13 for use in the method or in the vacuum belt filter device and some embodiments and variants of the wear strip will be described in greater detail.

The detachable wear strip 13 has an elongated base portion 18 having a first lateral side edge (not marked with a reference numeral) and a second lateral side edge (not marked with a reference numeral), and the detachable wear strip 13 comprising at least one intelligent identifier 14.

The detachable wear strip 13 may comprise a first longitudinal side flange 19 at the first lateral side edge of the elongated base portion 18 and a second longitudinal side flange 20 at the second lateral side edge of the elongated base portion 18 so that a second groove 22 is formed between the first longitudinal side flange 19 and the second longitudinal side flange 20.

The intelligent identifier 14 can be at least partly embedded, preferably fully embedded, in material forming the detachable wear strip 13. The detachable wear strip 13 is preferably, but not necessarily, formed of material comprising polymer.

The intelligent identifier 14 can be an active RFID device. An active RFID device normally includes a power source (not shown in the drawings) such as a battery and a RFID communications unit (not shown in the drawings) that includes a transmitter (not shown in the drawings) and/or a receiver (not shown in the drawings) and other components (not shown in the drawings) of the active RFID device.

The intelligent identifier 14 can be a passive RFID device. A passive RFID device does not include a power source, and turns on when a RF signal is received by the passive RFID device. A passive RFID device normally includes an antenna (not shown in the drawings) and base (not shown in the drawings) in communication with the antenna. When the antenna absorbs a radio frequency signal having a key frequency from an interrogator, the antenna collects the RF energy and transmits the energy to the base. In response to receiving the energy, the base sends a signal back to the interrogator.

The intelligent identifier 14 can be a semi-passive RFID device. A semi-passive RFID device is similar to a passive RFID device with the exception that the base is powered by a power source (not shown in the drawings).

The detachable wear strip 13 comprising a RFID device 14 comprises perforations 23 for allowing lubricating fluid such as water to pass through the detachable wear strip 13 comprising a RFID device 14.

The detachable wear strip 13 may comprise several fixedly or releasable connected wear strip sections 21, as shown in figure 9, or be in one-piece form, as shown in figure 8.

The detachable wear strip 13 may comprise an upper plane surface 24 and a lower plane surface 25 that is parallel with the upper plane surface 24. In such case the detachable wear strip 13 can comprise an intelligent identifier 14 in the form of a first intelligent identifier 14a at a first distance C from the upper plane surface 24, and an intelligent identifier 14 in the form of a second intelligent identifier 14b at a second distance D from the lower plane surface 25. The distance between the upper plane surface 24 and the lower plane surface 25 may be between 2 and 7 mm, preferably between 4 and 5 mm. The first distance C being may be between 1 and 3 mm, preferably between 1.5 and 2.5 mm, more preferably about 2 mm. The second distance D may be between 0.5 and 1.5 mm, preferably about 1 mm. A third distance W between the first intelligent identifier and the second intelligent identifier in a direction measured perpendicular to the upper plane surface 24 and the lower plane surface 25 is preferably, but not necessarily, about 1 mm. Providing a first intelligent identifier 14a and a second intelligent identifier 14b as described allows monitoring of the wearing of a detachable wars strip 13 by receiving different kind of signals depending on from which intelligent identifier, the first intelligent identifier 14a the a second intelligent identifier 14b, a signal is received from.

## Claims

1. A method for monitoring the condition of a sealing arrangement (1) between an endless moving filter belt (2) of a vacuum belt filter device and a vacuum arrangement (3) of the vacuum belt filter device, wherein the sealing arrangement (1) comprises an endless seal belt (17) running in contact with a low pressure side of the endless moving filter belt (2) with respect to a first groove (4) of the vacuum arrangement (3),
**characterized**
**by** a first providing step for providing the sealing arrangement (1) with a detachable wear strip (13), wherein the detachable wear strip (13) that is provided in the first providing step comprises perforations (23) for allowing lubricating fluid to pass through the detachable wear strip (13),
by a first arranging step for arranging the detachable wear strip (13) between the vacuum arrangement (3) and the endless seal belt (17),
by a second providing step for providing an intelligent identifier (14),
by a second arranging step for arranging the intelligent identifier (14) between the vacuum arrangement (3) and the endless seal belt (17) into an identifying position,
by a third providing step for providing an interrogator (15), and
by receiving a signal with said interrogator (15) from said intelligent identifier (14) indicative of the condition of the detachable wear strip (13).

2. The method according to claim 1, **characterized**
**by** providing the intelligent identifier (14) in the second providing step at least partly in the detachable wear strip (13) that is provided in the first providing step, and
by arranging the intelligent identifier (14) in the second arranging step between the vacuum arrangement (3) and the endless seal belt (17) by arranging the detachable wear strip (13) between the vacuum arrangement (3) and the endless seal belt (17) in the first arranging step.

3. The method according to claim 1, **characterized**
**by** arranging the intelligent identifier (14) in the second arranging step between the vacuum arrangement (3) and the detachable wear strip (13).

4. The method according to any of the claims 1 to 3, **characterized**
**by** receiving a signal with said interrogator (15) from said intelligent identifier (14) indicative of the condition of the detachable wear strip (13) after the thickness of the detachable wear strip (13) has worn to a threshold thickness.

5. The method according to any of the claims 1 to 3, **characterized**
**by** receiving a signal with said interrogator (15) from said intelligent identifier (14) indicative of the condition of the detachable wear strip (13) until the thickness of the detachable wear strip (13) has worn to a threshold thickness.

6. The method according to any of the claims 1 to 3, **characterized**
**by** receiving a signal with said interrogator (15) from said intelligent identifier (14) indicative of the condition of the detachable wear strip (13) as long as said intelligent identifier (14) is in said identifying position.

7. A vacuum belt filter device comprising an endless moving filter belt (2), a vacuum arrangement (3), and an arrangement for monitoring the condition of a sealing arrangement (1) comprises an endless seal belt (17) running in contact with a low pressure side of the endless moving filter belt (2) with respect to a first groove (4) of the vacuum arrangement (3),
**characterized**
**by** the sealing arrangement (1) comprises a detachable wear strip (13) arranged between the vacuum arrangement (3) and the endless seal belt (17), wherein the detachable wear strip (13) comprises perforations (23) for allowing lubricating fluid to pass through the detachable wear strip (13)
by an intelligent identifier (14) arranged between the vacuum arrangement (3) and the endless seal belt (17) in an identifying position,
by an interrogator (15), and
by said interrogator (15) being configured to receive a signal from the intelligent identifier (14) indicative of the condition of the detachable wear strip (13).

8. The vacuum belt filter device according to claim 7, **characterized**
**by** the intelligent identifier (14) being at least partly arranged in the detachable wear strip (13) that is arranged between the vacuum arrangement (3) and the endless seal belt (17).

9. The vacuum belt filter device according to claim 7, **characterized**
**by** the intelligent identifier (14) being arranged between the vacuum arrangement (3) and the detachable wear strip (13).

10. The vacuum belt filter device according to any of the claims 7 to 9, **characterized**
**by** said interrogator (15) being configured to receive a signal from said intelligent identifier (14) indicative of the condition of the detachable wear strip (13) after the thickness of the detachable wear strip (13) has worn to a threshold thickness.

11. The vacuum belt filter device according to any of the claims 7 to 9, **characterized**
**by** said interrogator (15) being configured to receive a signal from said intelligent identifier (14) indicative of the condition of the detachable wear strip (13) until the thickness of the detachable wear strip (13) has worn to a threshold thickness.

12. The vacuum belt filter device according to any of the claims 7 to 9, **characterized**
**by** said interrogator (15) being configured to receive a signal from said intelligent identifier (14) indicative of the condition of the detachable wear strip (13) as long as said intelligent identifier (14) is in said identifying position.

13. A detachable wear strip (13) for use in a method according to any of the claims 1 to 6 or in a vacuum belt filter device according to any of the claims 7 to 12, **characterized**
**by** the detachable wear strip (13) having an elongated base portion (18) having a first lateral side edge and a second lateral side edge,
by the detachable wear strip (13) comprises perforations (23) for allowing lubricating fluid to pass through the detachable wear strip (13),
by the detachable wear strip (13) comprising at least one intelligent identifier (14), and
by the intelligent identifier (14) being a RFID device such as an active RFID device, a passive RFID device, or a semi-passive RFID device.

14. The detachable wear strip (13) according to claim 13, **characterized by** the intelligent identifier (14) being at least partly embedded in material forming the detachable wear strip (13).

15. The detachable wear strip (13) according to claim 13 or 14, **characterized**
**by** the detachable wear strip (13) comprises an upper plane surface (24) and a lower plane surface (25) that is parallel with the upper plane surface (24),
by the detachable wear strip (13) comprises an intelligent identifier in the form of a first intelligent identifier at a first distance C from the upper plane surface (24), and
by the detachable wear strip (13) comprises an intelligent identifier in the form of a second intelligent identifier at a second distance D from the lower plane surface (25).

## Patentansprüche

1. Verfahren zur Überwachung des Zustands einer Dichtungsanordnung (1) zwischen einem laufenden Endlosfilterband (2) einer Vakuumbandfiltervorrichtung und einer Vakuumanordnung (3) der Vakuumbandfiltervorrichtung, wobei die Dichtungsanordnung (1) ein Endlosdichtband (17) umfasst, das in Kontakt mit einer Niederdruckseite des laufenden Endlosfilterbands (2) in Bezug zu einer ersten Nut (4) der Vakuumanordnung (3) läuft,
**gekennzeichnet**
**durch** einen ersten Bereitstellungsschritt zum Bereitstellen der Dichtungsanordnung (1) mit einem abnehmbaren Verschleißstreifen (13), wobei der im ersten Bereitstellungsschritt bereitgestellte abnehmbare Verschleißstreifen (13) Perforationen (23) umfasst, um zu ermöglichen, dass Schmierfluid durch den abnehmbaren Verschleißstreifen (13) gelangt,
durch einen ersten Anordnungsschritt zum Anordnen des abnehmbaren Verschleißstreifens (13) zwischen der Vakuumanordnung (3) und dem Endlosdichtband (17),
durch einen zweiten Bereitstellungsschritt zum Bereitstellen eines intelligenten Identifikators (14),
durch einen zweiten Anordnungsschritt zum Anordnen des intelligenten Identifikators (14) zwischen der Vakuumanordnung (3) und dem Endlosdichtband (17) in eine identifizierende Position,
durch einen dritten Bereitstellungsschritt zum Bereitstellen eines Abfragers (15), und
**dadurch, dass** mit dem Abfrager (15) aus dem intelligenten Identifikator (14) ein Signal empfangen wird, das den Zustand des abnehmbaren Verschleißstreifens (13) anzeigt.

2. Verfahren nach Anspruch 1, **gekennzeichnet**
**dadurch, dass** der intelligente Identifikator (14) im zweiten Bereitstellungsschritt zumindest teilweise in dem im ersten Bereitstellungsschritt bereitgestellten abnehmbaren Verschleißstreifen (13) bereitgestellt wird, und
dadurch, dass der intelligente Identifikator (14) im zweiten Anordnungsschritt zwischen der Vakuumanordnung (3) und dem Endlosdichtband (17) angeordnet wird, indem der abnehmbare Verschleißstreifen (13) im ersten Anordnungsschritt zwischen der Vakuumanordnung (3) und dem Endlosdichtband (17) angeordnet wird.

3. Verfahren nach Anspruch 1, **gekennzeichnet**
**dadurch, dass** der intelligente Identifikator (14) im zweiten Anordnungsschritt zwischen der Vakuumanordnung (3) und dem abnehmbaren Verschleißstreifen (13) angeordnet wird.

4. Verfahren nach einem der Ansprüche 1 bis 3, **gekennzeichnet**
**dadurch, dass** mit dem Abfrager (15) aus dem intelligenten Identifikator (14) ein Signal empfangen wird, das den Zustand des abnehmbaren Verschleißstreifens (13) anzeigt, nachdem die Dicke des abnehmbaren Verschleißstreifens (13) auf eine Grenzdicke verschlissen ist.

5. Verfahren nach einem der Ansprüche 1 bis 3, **gekennzeichnet**
**dadurch, dass** mit dem Abfrager (15) aus dem intelligenten Identifikator (14) ein Signal empfangen wird, das den Zustand des abnehmbaren Verschleißstreifens (13) anzeigt, bis die Dicke des abnehmbaren Verschleißstreifens (13) auf eine Grenzdicke verschlissen ist.

6. Verfahren nach einem der Ansprüche 1 bis 3, **gekennzeichnet**
**dadurch, dass** mit dem Abfrager (15) aus dem intelligenten Identifikator (14) ein Signal empfangen wird, das den Zustand des abnehmbaren Verschleißstreifens (13) anzeigt, so lange sich der intelligente Identifikator (14) in der identifizierenden Position befindet.

7. Eine Vakuumbandfiltervorrichtung, umfassend ein laufendes Endlosfilterband (2), eine Vakuumanordnung (3) und eine Anordnung zur Überwachung des Zustands einer Dichtungsanordnung (1), umfasst ein Endlosdichtband (17), das in Kontakt mit einer Niederdruckseite des laufenden Endlosfilterbands (2) in Bezug zu einer ersten Nut (4) der Vakuumanordnung (3) läuft,
**gekennzeichnet**
**dadurch, dass** die Dichtungsanordnung (1) einen zwischen der Vakuumanordnung (3) und dem Endlosdichtband (17) angeordneten abnehmbaren Verschleißstreifen (13) umfasst, wobei der abnehmbare Verschleißstreifen (13) Perforationen (23) umfasst, um zu ermöglichen, dass Schmierfluid durch den abnehmbaren Verschleißstreifen (13) gelangt,
durch einen intelligenten Identifikator (14), der zwischen der Vakuumanordnung (3) und dem Endlosdichtband (17) in einer identifizierenden Position angeordnet ist,
durch einen Ab frag er (15); und
dadurch, dass der Abfrager (15) eingerichtet ist, um vom intelligenten Identifikator (14) ein Signal zu empfangen, das den Zustand des abnehmbaren Verschleißstreifens (13) anzeigt.

8. Vakuumbandfiltervorrichtung nach Anspruch 7, **gekennzeichnet**
**dadurch, dass** der intelligente Identifikator (14) mindestens teilweise im abnehmbaren Verschleißstreifen (13) angeordnet ist, der zwischen der Vakuumanordnung (3) und dem Endlosdichtband (17) angeordnet ist.

9. Vakuumbandfiltervorrichtung nach Anspruch 7, **gekennzeichnet**
**dadurch, dass** der intelligente Identifikator (14) zwischen der Vakuumanordnung (3) und dem abnehmbaren Verschleißstreifen (13) angeordnet ist.

10. Vakuumbandfiltervorrichtung nach einem der Ansprüche 7 bis 9, **gekennzeichnet**
**dadurch, dass** der Abfrager (15) eingerichtet ist, um vom intelligenten Identifikator (14) ein Signal zu empfangen, das den Zustand des abnehmbaren Verschleißstreifens (13) anzeigt, nachdem die Dicke des abnehmbaren Verschleißstreifens (13) auf eine Grenzdicke verschlissen ist.

11. Vakuumbandfiltervorrichtung nach einem der Ansprüche 7 bis 9, **gekennzeichnet**
**dadurch, dass** der Abfrager (15) eingerichtet ist, um vom intelligenten Identifikator (14) ein Signal zu empfangen, das den Zustand des abnehmbaren Verschleißstreifens (13) anzeigt, bis die Dicke des abnehmbaren Verschleißstreifens (13) auf eine Grenzdicke verschlissen ist.

12. Vakuumbandfiltervorrichtung nach einem der Ansprüche 7 bis 9, **gekennzeichnet**
**dadurch, dass** der Abfrager (15) eingerichtet ist, um vom intelligenten Identifikator (14) ein Signal zu empfangen, das den Zustand des abnehmbaren Verschleißstreifens (13) anzeigt, so lange sich der intelligente Identifikator (14) in der identifizierenden Position befindet.

13. Abnehmbarer Verschleißstreifen (13) zur Verwendung in einem Verfahren nach einem der Ansprüche 1 bis 6 oder in einer Vakuumbandfiltervorrichtung nach einem der Ansprüche 7 bis 12, **gekennzeichnet**
**dadurch, dass** der abnehmbare Verschleißstreifen (13) einen länglichen Basisabschnitt (18) aufweist, der eine erste seitliche Seitenkante und eine zweite seitliche Seitenkante aufweist,
dadurch, dass der abnehmbare Verschleißstreifen (13) Perforationen (23) umfasst, um zu ermöglichen, dass Schmierfluid durch den abnehmbaren Verschleißstreifen (13) gelangt,
dadurch, dass der abnehmbare Verschleißstreifen (13) mindestens einen intelligenten Identifikator (14) umfasst, und
dadurch dass der intelligente Identifikator (14) eine RFID-Vorrichtung wie eine aktive RFID-Vorrichtung, eine passive RFID-Vorrichtung oder eine halbpassive RFID-Vorrichtung ist.

14. Abnehmbarer Verschleißstreifen (13) nach Anspruch 13, **gekennzeichnet dadurch, dass** der intelligente Identifikator (14) mindestens teilweise in ein Material, das den abnehmbaren Verschleißstreifen (13) ausbildet, eingebettet ist.

15. Abnehmbarer Verschleißstreifen (13) nach Anspruch 13 oder 14, **gekennzeichnet**
**dadurch, dass** der abnehmbare Verschleißstreifen (13) eine obere plane Fläche (24) und eine untere plane Fläche (25), die parallel zur oberen planen Fläche (24) ist, aufweist,
dadurch, dass der abnehmbare Verschleißstreifen (13) einen intelligenten Identifikator in Form eines ersten intelligenten Identifikators in einem ersten Abstand C von der oberen planen Fläche (24) umfasst, und
dadurch, dass der abnehmbare Verschleißstreifen (13) einen intelligenten Identifikator in Form eines zweiten intelligenten Identifikators in einem zweiten Abstand D von der oberen planen Fläche (25) umfasst.

## Revendications

1. Procédé pour surveiller l'état d'un agencement d'étanchéité (1) entre une bande filtre sans fin mobile (2) d'un dispositif de filtre à bande sous vide et un agencement à vide (3) du dispositif de filtre à bande sous vide, dans lequel l'agencement d'étanchéité (1) comprend une bande d'étanchéité sans fin (17) défilant au contact d'un côté basse pression de la bande filtre sans fin mobile (2) par rapport à une première rainure (4) de l'agencement à vide (3),
**caractérisé**
**par** une première étape de fourniture pour fournir l'agencement d'étanchéité (1) avec une bande d'usure détachable (13), ladite bande d'usure détachable (13), qui est fournie dans la première étape de fourniture, comprenant des perforations (23) pour permettre à un fluide lubrifiant de passer à travers la bande d'usure détachable (13),
par une première étape d'agencement pour agencer la bande d'usure détachable (13) entre l'agencement à vide (3) et la bande d'étanchéité sans fin (17),
par une deuxième étape de fourniture pour fournir un identificateur intelligent (14) ; par une deuxième étape d'agencement pour agencer l'identificateur intelligent (14) entre l'agencement à vide (3) et la bande d'étanchéité sans fin (17) dans une position identifiante,
par une troisième étape de fourniture pour fournir un interrogateur (15), et
par une étape consistant à recevoir, avec ledit interrogateur (15), un signal indicateur de l'état de la bande d'usure détachable (13) en provenance dudit identificateur intelligent (14).

2. Procédé selon la revendication 1, **caractérisé**
**en ce que**, dans la deuxième étape de fourniture, l'identificateur intelligent (14) est fourni au moins partiellement dans la bande d'usure détachable (13) qui est fournie dans la première étape de fourniture, et
**en ce que**, dans la deuxième étape d'agencement, l'identificateur intelligent (14) est agencé entre l'agencement à vide (3) et la bande d'étanchéité sans fin (17) à cause de l'agencement de la bande d'usure détachable (13) entre l'agencement à vide (3) et la bande d'étanchéité sans fin (17) dans la première étape d'agencement.

3. Procédé selon la revendication 1, **caractérisé**
**en ce que**, dans la deuxième étape d'agencement, l'identificateur intelligent (14) est agencé entre l'agencement à vide (3) et la bande d'usure détachable (13).

4. Procédé selon l'une des revendications 1 à 3, **caractérisé**
**en ce qu'**un signal indicateur de l'état de la bande d'usure détachable (13) en provenance dudit identificateur intelligent (14) est reçu avec ledit interrogateur (15) après que l'épaisseur de la bande d'usure détachable (13) s'est usée jusqu'à une épaisseur seuil.

5. Procédé selon l'une des revendications 1 à 3, **caractérisé**
**en ce qu'**un signal indicateur de l'état de la bande d'usure détachable (13) en provenance dudit identificateur intelligent (14) est reçu avec ledit interrogateur (15) jusqu'au moment où l'épaisseur de la bande d'usure détachable (13) s'est usée jusqu'à une épaisseur seuil.

6. Procédé selon l'une des revendications 1 à 3, **caractérisé**
**en ce qu'**un signal indicateur de l'état de la bande d'usure détachable (13) en provenance dudit identificateur intelligent (14) est reçu avec ledit interrogateur (15) aussi longtemps que ledit identificateur intelligent (14) est dans ladite position identifiante.

7. Un dispositif de filtre à bande sous vide comprenant une bande filtre sans fin mobile (2), un agencement à vide (3) et un agencement pour surveiller l'état d'un agencement d'étanchéité (1) comprend une bande d'étanchéité sans fin (17) défilant au contact d'un côté basse pression de la bande filtre sans fin mobile (2) par rapport à une première rainure (4) de l'agencement à vide (3),
**caractérisé**
**en ce que** l'agencement d'étanchéité (1) comprend une bande d'usure détachable (13) agencée entre l'agencement à vide (3) et la bande d'étanchéité sans fin (17), ladite bande d'usure détachable (13) comprenant des perforations (23) pour permettre à un fluide lubrifiant de passer à travers la bande d'usure détachable (13),
par un identificateur intelligent (14) agencé entre l'agencement à vide (3) et la bande d'étanchéité sans fin (17) dans une position identifiante,
par un interrogateur (15) ; et
**en ce que** ledit interrogateur (15) est configuré pour recevoir un signal indicateur de l'état de la bande d'usure détachable (13) en provenance dudit identificateur intelligent (14).

8. Dispositif de filtre à bande sous vide selon la revendication 7, **caractérisé**
**en ce que** l'identificateur intelligent (14) est agencé au moins partiellement dans la bande d'usure détachable (13) qui est agencé entre l'agencement à vide (3) et la bande d'étanchéité sans fin (13).

9. Dispositif de filtre à bande sous vide selon la revendication 7, **caractérisé**
**en ce que** l'identificateur intelligent (14) est agencé entre l'agencement à vide (3) et la bande d'usure détachable (13).

10. Dispositif de filtre à bande sous vide selon l'une des revendications 7 à 9, **caractérisé**
**en ce que** ledit interrogateur (15) est configuré pour recevoir un signal indicateur de l'état de la bande d'usure détachable (13) en provenance dudit identificateur intelligent (14) après que l'épaisseur de la bande d'usure détachable (13) s'est usée jusqu'à une épaisseur seuil.

11. Dispositif de filtre à bande sous vide selon l'une des revendications 7 à 9, **caractérisé**
**en ce que** ledit interrogateur (15) est configuré pour recevoir un signal indicateur de l'état de la bande d'usure détachable (13) en provenance dudit identificateur intelligent (14) jusqu'au moment où l'épaisseur de la bande d'usure détachable (13) s'est usée jusqu'à une épaisseur seuil.

12. Dispositif de filtre à bande sous vide selon l'une des revendications 7 à 9, **caractérisé**
**en ce que** ledit interrogateur (15) est configuré pour recevoir un signal indicateur de l'état de la bande d'usure détachable (13) en provenance dudit identificateur intelligent (14) aussi longtemps que ledit identificateur intelligent (14) est dans ladite position identifiante.

13. Bande d'usure détachable (13) pour l'utilisation dans un procédé selon l'une des revendications 1 à 6 ou dans un dispositif de filtre à bande sous vide selon l'une des revendications 7 à 12, **caractérisé**
**en ce que** la bande d'usure détachable (13) a une portion de base allongée (18) ayant un premier bord latéral et un deuxième bord latéral,
**en ce que** la bande d'usure détachable (13) comprend des perforations (23) pour permettre à un fluide lubrifiant de passer à travers la bande d'usure détachable (13),
**en ce que** la bande d'usure détachable (13) comprend au moins un identificateur intelligent (14), et
**en ce que** l'identificateur intelligent (14) est un dispositif RFID tel qu'un dispositif RFID actif, un dispositif RFID passif ou un dispositif RFID semi-passif.

14. Bande d'usure détachable (13) selon la revendication 13, **caractérisée en ce que** l'identificateur intelligent (14) est incorporé au moins partiellement dans un matériau formant la bande d'usure détachable (13).

15. Bande d'usure détachable (13) selon la revendication 13 ou 14, **caractérisée**
**en ce que** la bande d'usure détachable (13) comprend une surface plane supérieure (24) et une surface plane inférieure (25) qui est parallèle à la surface plane supérieure (24),
**en ce que** la bande d'usure détachable (13) comprend un identificateur intelligent sous forme d'un premier identificateur intelligent à une première distance C de la surface plane supérieure (24), et
**en ce que** la bande d'usure détachable (13) comprend un identificateur intelligent sous forme d'un deuxième identificateur intelligent à une deuxième distance D de la surface plane inférieure (25).
